# EUROPEAN PATENT APPLICATION

(11) **EP 4 124 129 A1**
(43) Date of publication of application: **25.01.2023**
(21) Application number: 21187371.6
(22) Date of filing: 23.07.2021
(51) Int. Cl.: H04W 60/04, H04W 60/06, H04W 60/00

(54) **QUOTA IN NETWORK SLICES**

(71) Applicant: Nokia Technologies Oy, 02610 Espoo (FI)
(72) Inventor: NATARAJAN, Rajesh Babu, 560036 Bangalore (IN); KHARE, SAURABH, 560005 Bangalore (IN); CASATI, Alessio, West Molesey, KT8 1NT (GB)
(74) Representative: Nokia EPO representatives

(57) **Abstract**

Method comprising:
monitoring if an admission control function of a slice receives a registration information, wherein the registration information comprises an identifier of a terminal and an identifier of a second registration management function, and the registration information informs that the terminal registers with the second registration management function;
checking if the admission control function stores a record comprising the received identifier of the terminal if the admission control function receives the registration information, wherein the record indicates that the terminal is registered with a first registration management function, wherein each of the first and second registration management functions is responsible for registering the terminal if the terminal is served by the slice;
updating the record by the received identifier of the second registration management function if the admission control function stores the record.

## Description

### Field of the invention

The present disclosure relates to quota in network slices (hereinafter sometimes called "slice"). In particular, it relates to an accurate count of the UEs using the slice and/or the efficient exploitation of the quota.

### Abbreviations

- 3GPP: 3^{rd} Generation Partnership Project
- 4G / 5G / 6G 4^{th} / 5^{th} / 6^{th}: Generation
- 5GS: 5G System
- AMF: Access and Mobility Management Function
- CM: Connection Management
- DL: Downlink
- GSM: Global System for Mobile Communication
- GSMA: GSM Alliance
- GST: Generic Slice Template
- ID: Identifier
- IMSI: International Mobile Subscriber Identity
- KI: Key Issue
- LTE: Long-Term Evolution
- MME: Mobility Management Entity
- MTC: Machine-Type Communication
- NF: Network Function
- NG-RAN: Next Generation RAN
- NSAC: Network Slice Admission Control
- NSACF: Network Slice Admission Control Function
- PDU: Protocol Data Unit
- PPF: Paging Proceed Flag
- RAN: Radio Access Network
- RM: Registration Management
- SMF: Session Management Function
- S-NSSAI: Single Network Slice Selection Assistance Information
- SUPI: Subscription Permanent Identifier
- TR: Technical Report
- TS: Technical Specification
- UDM: Unified Data Management
- UE: User Equipment
- VLR: Visitor Location Register

Background

### Quota in network slices

As per 3GPP TR 23.700-40, below KI#1 is defined: 5.1 Key Issue #1: Support of network slice related quota on the maximum number of UEs

### 5.1.1 General Description

One of the attributes in the GST documented in GSMA 5GJA NG.116 is the following:

### Number of terminals

This attribute describes the maximum number of terminals that can use the network slice simultaneously. Either Number of connections or Number of terminals shall be present.

### Additional information

This is an important input to scale the network slice and provide enough resources to the network slice. It is a significant difference if the network slice is used to serve 10 users or 1 000 000 users simultaneously.

This key issue will study whether and how to support the quota on the maximum number of UEs concurrently registering for a network slice defined by an S-NSSAI. In particular, this KI will address:
- How does 5GS know about the maximum number of UEs that the network slice can support? Which NF(s) need to know such quota?
- How does 5GS know about the current number of UEs accessing the network slice? Which NF(s) need to know about this information?

As per the agreed Solution, following is described in S2-2101605:

### 5.15.xx.1 Maximum number of UEs per network slice admission control

The NSACF controls (i.e. increase or decrease) the current number of UEs registered for a network slice so that it does not exceed the maximum number of UEs allowed to register with that network slice. The NSACF also maintains a list of UE IDs registered with a network slice that is subject to NSAC. When the current number of UEs registered with a network slice is to be increased, the NSACF first checks whether the UE Identity is already in the list of UEs registered with that network slice and if not, it checks whether the maximum number of UEs per network slice for that network slice has already been reached.

### UE Connection and Registration Management

As per 3GPP TS 23.501, section 5.3.2.2.3:
5.4.1 UE reachability in CM-IDLE

The AMF allocates a periodic registration timer value to the UE based on local policies, subscription information and information provided by the UE. After the expiry of the periodic registration timer, the UE shall perform a periodic registration. If the UE moves out of network coverage when its periodic registration timer expires, the UE shall perform a Registration procedure when it next returns to the coverage.

The AMF runs a Mobile Reachable timer for the UE. The timer is started with a value longer than the UE's periodic registration timer whenever the CM state for the UE in RM-REGISTERED state changes to CM-IDLE. If the AMF receives an elapsed time from RAN when RAN initiate UE context release indicating UE unreachable, the AMF should deduce a Mobile Reachable timer value based on the elapsed time received from RAN and the normal Mobile Reachable timer value. The AMF stops the Mobile Reachable timer, if the UE CM state in the AMF moves to CM-CONNECTED state. If the Mobile Reachable timer expires, the AMF determines that the UE is not reachable.

However, the AMF does not know for how long the UE remains not reachable, thus the AMF shall not immediately de-register the UE. Instead, after the expiry of the Mobile Reachable timer, the AMF should clear the PPF and shall start an Implicit De-registration timer, with a relatively large value. The AMF shall stop the Implicit De-registration timer and set the PPF if the AMF moves the UE CM state in the AMF to CM-CONNECTED state.

If the PPF is not set, the AMF does not page the UE and shall reject any request for delivering DL signalling or data to this UE.

If the Implicit De-registration timer expires before the UE contacts the network, the AMF de-registers the UE. Sometimes, this de-registering because of expiry of the De-registration timer is called "implicit de-registering", in contrast to "explicit de-registering" based on a trigger from UE.

As part of deregistration for a particular access type (3GPP or non-3GPP), the AMF shall request the UE's related SMF to release the PDU Sessions established on that access.

### References:

[1] 3GPP TS 23.501 - 5G; System Architecture for the 5G System
[2] 3GPP TS 23 502 - 5G; Procedures for the 5G System;
[3] 3GPP TR 23.700-40 Study on enhancement of network slicing; Phase 2

### Summary

It is an object of the present invention to improve the prior art.

According to a first aspect of the invention, there is provided an apparatus comprising: one or more processors, and memory storing instructions that, when executed by the one or more processors, cause the apparatus to perform: monitoring if a terminal registers with a registration management function , wherein the registration management function is responsible for registering the terminal if the terminal is served by a slice; informing an admission control function of the slice on an identifier of the terminal and an identifier of the registration management function if the terminal registers with the registration management function.

According to a second aspect of the invention, there is provided an apparatus comprising: one or more processors, and memory storing instructions that, when executed by the one or more processors, cause the apparatus to perform: monitoring if an admission control function of a slice receives a registration information, wherein the registration information comprises an identifier of a terminal and an identifier of a second registration management function, and the registration information informs that the terminal registers with the second registration management function; checking if the admission control function stores a record comprising the received identifier of the terminal if the admission control function receives the registration information, wherein the record indicates that the terminal is registered with a first registration management function, wherein each of the first and second registration management functions is responsible for registering the terminal if the terminal is served by the slice; updating the record by the received identifier of the second registration management function if the admission control function stores the record.

According to a third aspect of the invention, there is provided an apparatus comprising: one or more processors, and memory storing instructions that, when executed by the one or more processors, cause the apparatus to perform: monitoring if a registration management function responsible for registering a terminal if the terminal is served by a slice determines that the terminal registered at the registration management function is not reachable but a de-registration timer of the registration management function for the terminal has not expired yet; if the registration management function receives the information that the terminal is not reachable but the de-registration timer for the terminal has not expired yet: instructing an admission control function of the slice to remove a record comprising an identifier of the terminal.

According to a fourth aspect of the invention, there is provided an apparatus comprising: one or more processors, and memory storing instructions that, when executed by the one or more processors, cause the apparatus to perform: monitoring if an admission control function of a slice receives a first request for a first terminal and a second request for a second terminal, wherein each of the first and second requests indicates that the respective terminal is to be registered at a respective registration management function responsible for registering the terminal if the terminal is served by the slice; deciding, if the first request and the second request are received, whether, according to a count of registered terminals stored at the admission control function, a quota of the slice would be exceeded if the first terminal and the second terminal were registered at the respective registration management function; checking if a priority flag for the second terminal is set if the first request and the second request are received; if the quota of the slice would be exceeded if the first terminal and the second terminal were registered at the respective registration management function, and the priority flag for the second terminal is not set: prohibiting the respective registration management function to register the second terminal.

According to a fifth aspect of the invention, there is provided a method comprising: monitoring if a terminal registers with a registration management function , wherein the registration management function is responsible for registering the terminal if the terminal is served by a slice; informing an admission control function of the slice on an identifier of the terminal and an identifier of the registration management function if the terminal registers with the registration management function.

The identifier of the registration management function may comprise an identifier of a set of registration management functions to which the registration management function belongs.

According to a sixth aspect of the invention, there is provided a method comprising: monitoring if an admission control function of a slice receives a registration information, wherein the registration information comprises an identifier of a terminal and an identifier of a second registration management function, and the registration information informs that the terminal registers with the second registration management function; checking if the admission control function stores a record comprising the received identifier of the terminal if the admission control function receives the registration information, wherein the record indicates that the terminal is registered with a first registration management function, wherein each of the first and second registration management functions is responsible for registering the terminal if the terminal is served by the slice; updating the record by the received identifier of the second registration management function if the admission control function stores the record.

The method may further comprise: supervising if the admission control function receives a deregistration information, wherein the deregistration information comprises the identifier of the terminal and an identifier of a third registration management function, and the deregistration information informs that the terminal deregisters from the third registration management function; checking if the admission control function stores the record comprising the identifier of the terminal and the identifier of the first registration management function or the second registration management function if the deregistration information is received; comparing the identifier of the third registration management function with the identifier registration management function comprised in the stored record if the admission control function stores the record; inhibiting removing the record if the identifier of the third registration management function is different from the identifier of the registration management function comprised in the stored record.

The method may further comprise removing the record if the identifier of the third registration management function is equal to the identifier of the registration management function comprised in the stored record.

At least one of the identifier of the first registration management function, the identifier of the second registration management function, and the identifier of the third registration management function may comprise an identifier of a respective set of registration management functions to which the respective registration management function belongs.

According to a seventh aspect of the invention, there is provided a method comprising: monitoring if a registration management function responsible for registering a terminal if the terminal is served by a slice determines that the terminal registered at the registration management function is not reachable but a de-registration timer of the registration management function for the terminal has not expired yet; if the registration management function receives the information that the terminal is not reachable but the de-registration timer for the terminal has not expired yet: instructing an admission control function of the slice to remove a record comprising an identifier of the terminal.

The method may further comprise: supervising if the registration management function receives an information that the terminal becomes reachable before the de-registration timer has expired; if the registration management function receives the information that the terminal becomes reachable before the de-registration timer has expired: instructing the admission control function to create a record comprising the identifier of the terminal and an identifier of the registration management function.

The method may further comprise: if the registration management function receives the information that the terminal is not reachable but the de-registration timer for the terminal has not expired yet: setting an update flag for the terminal, wherein the update flag indicates that the admission control function is instructed to remove the record comprising the identifier of the terminal; if the registration management function receives the information that the terminal becomes reachable before the de-registration timer for the terminal has expired: checking if the update flag is set for the terminal; if the update flag is set for the terminal: cancelling the update flag for the terminal; if the update flag is not set for the terminal: inhibiting the instructing the admission control function to create the record comprising the identifier of the terminal.

The method may further comprise: if the registration management function receives the information that the terminal is not reachable but the de-registration timer for the terminal has not expired yet: instructing the admission control function to set a priority flag for the terminal.

The method may further comprise: checking if a number of terminals registered at the registration management function exceeds a predefined portion of a quota of the slice; if the number of the terminals does not exceed the predefined portion of the quota: inhibiting the instructing the admission control function to remove the record comprising the identifier of the terminal

The identifier of the registration management function may comprise an identifier of a set of registration management functions to which the registration management function belongs.

According to an eighth aspect of the invention, there is provided a method comprising: monitoring if an admission control function of a slice receives a first request for a first terminal and a second request for a second terminal, wherein each of the first and second requests indicates that the respective terminal is to be registered at a respective registration management function responsible for registering the terminal if the terminal is served by the slice; deciding, if the first request and the second request are received, whether, according to a count of registered terminals stored at the admission control function, a quota of the slice would be exceeded if the first terminal and the second terminal were registered at the respective registration management function; checking if a priority flag for the second terminal is set if the first request and the second request are received; if the quota of the slice would be exceeded if the first terminal and the second terminal were registered at the respective registration management function, and the priority flag for the second terminal is not set: prohibiting the respective registration management function to register the second terminal.

The method may further comprise: checking if a priority flag for the first terminal is set; if the quota of the slice would be exceeded if the first terminal and the second terminal were registered at the respective registration management function, the priority flag for the first terminal is set, and the priority flag for the second terminal is not set: informing the respective registration management function that the first terminal may be registered with the respective registration management function.

Each of the first and second requests may request to create a record for the respective terminal; each of the records may indicate that the respective terminal is registered at the respective registration management function; the count of registered terminals may be equal to the number of the records stored in the admission control function; and the method may further comprise: if the quota of the slice would be exceeded if the first terminal and the second terminal were registered at the respective registration management function, and the priority flag for the second terminal is not set: inhibiting the creating of the record for the second terminal.

The method may further comprise: supervising if the admission control function receives a request to set a priority flag for the first terminal; decrementing the count of registered terminals if the admission control function receives the request to set the priority flag for the first terminal; inhibiting to remove a stored record for the first terminal if the admission control function receives the request to set the priority flag for the first terminal; wherein the record for the first terminal may indicate that the first terminal is registered at the respective registration management function.

Each of the methods of the fifth to eighth aspects may be a method of admission control.

According to a ninth aspect of the invention, there is provided a computer program product comprising a set of instructions which, when executed on an apparatus, is configured to cause the apparatus to carry out the method according to any of the fifth to eighth aspects. The computer program product may be embodied as a computer-readable medium or directly loadable into a computer.

According to some embodiments of the invention, at least one of the following advantages may be achieved:
- quota may be better exploited;
- unnecessary signaling may be avoided;
- "dead" records may be avoided in NSACF.

It is to be understood that any of the above modifications can be applied singly or in combination to the respective aspects to which they refer, unless they are explicitly stated as excluding alternatives.

### Brief description of the drawings

Further details, features, objects, and advantages are apparent from the following detailed description of the preferred embodiments of the present invention which is to be taken in conjunction with the appended drawings, wherein:
Fig. 1 illustrates a problem solved by some example embodiments of the invention;
Fig. 2 shows a message sequence chart according to some example embodiments of the invention;
Fig. 3 shows a message sequence chart according to some example embodiments of the invention;
Fig. 4 shows an apparatus according to an example embodiment of the invention;
Fig. 5 shows a method according to an example embodiment of the invention;
Fig. 6 shows an apparatus according to an example embodiment of the invention;
Fig. 7 shows a method according to an example embodiment of the invention; and
Fig. 8 shows an apparatus according to an example embodiment of the invention;
Fig. 9 shows a method according to an example embodiment of the invention;
Fig. 10 shows an apparatus according to an example embodiment of the invention;
Fig. 11 shows a method according to an example embodiment of the invention; and
Fig. 12 shows an apparatus according to an example embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given by way of example only, and that it is by no way intended to be understood as limiting the invention to the disclosed details.

Moreover, it is to be understood that the apparatus is configured to perform the corresponding method, although in some cases only the apparatus or only the method are described.

The combination of the procedures described in the background section causes two problems:

### Problem 1:

Conventionally, NSACF considers only the UE ID to check if the UE is already accounted for or not, i.e., if there is a record with the UE ID in the NSACF indicating that the UE is admitted to the slice.

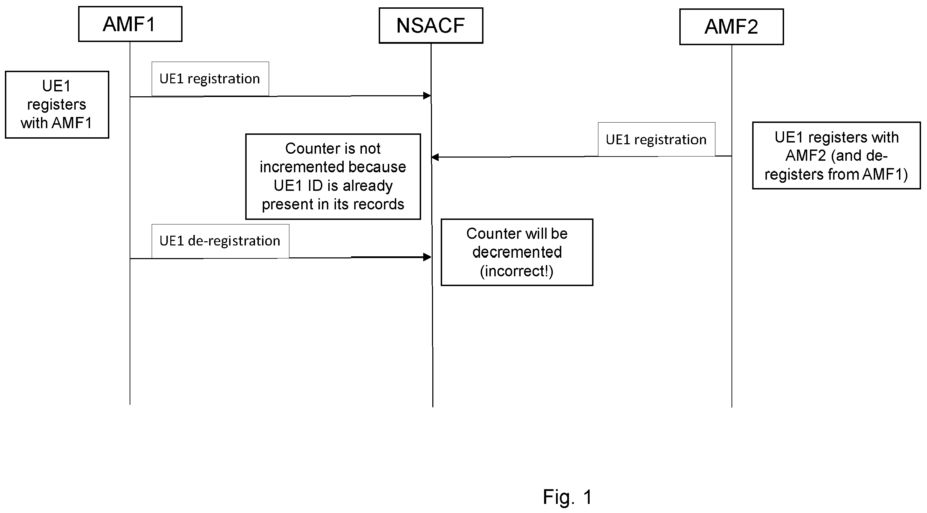

However, the UE might trigger registration from a new AMF before de-registration from the old AMF. This might lead to inaccurate counting when UE deregisters from the old AMF. This situation is shown in Fig. 1. As shown in Fig. 1, UE1 registers with AMF1 implemented in a slice. NSACF of the slice increments its counter by 1 and generates a record for UE1. After some time, UE1 registers with AMF2 implemented in the slice while it is still registered at AMF1, too. NSACF checks if there is a record comprising the ID of UE1 and finds the record for the registration of UE1 with AMF1. Therefore, NSACF does not increment its counter. Later, AMF1 deregisters UE1 and informs NSACF accordingly. NSACF decrements the counter and removes the record comprising the ID of UE1. Thus, NSACF does not count UE1 anymore, although it is still registered at AMF2. Thus, the quota of the slice may be exceeded.

### Problem 2:

In case the quota for a number of UE's for a slice has reached maximum value, the AMF would reject any new UE registration request for this slice. However, this way, the AMF might not exploit the quota efficiently. Namely, UE's which are currently unreachable (de-registration timer running) do not require any (significant) processing power. The AMF may treat these UE's which are unreachable (de-registration timer running) different from those UEs which are reachable to manage the quota more efficiently in such cases.

Some example embodiments of the invention address at least one of the above problems. Some of them may provide a complete solution considering the different scenarios discussed above.

According to some example embodiments of the invention, one or more of the following actions are performed:
- During UE Registration procedure, the AMF updates NSACF along with UE ID (e.g. SUPI or IMSI, etc.), the AMF Set ID, Access type. An AMF Set comprises one or more AMFs that serve a given area and Network Slice(s). AMF Set is unique within an AMF Region and it comprises AMFs that support the same Network Slice(s). Multiple AMF Sets may be defined per AMF Region. Instead of the AMF Set ID, the UE registration procedure may comprise the AMF ID. For the purpose of the present application, the AMF ID and the AMF set ID may be considered as synonymous unless otherwise indicated or made clear from the context.
- During UE Initiated De-registration procedure, the AMF informs NSACF, along with UE ID (SUPI or IMSI etc.), on the AMF Set ID, Access type.
- When UE becomes unreachable (Mobile reachable timer expiry and UE is in CM Idle state), then AMF starts de-registration timer for the UE and sets the PPF flag. AMF may update the NSACF to decrement a count by providing the UE details along with AMF Set ID and Access type and sets a flag "Update NSACF" so as to allow a new registration request to the slice (i.e. to the AMF Set of the slice). In some example embodiments, this procedure may be performed only if a predefined portion of the quota is utilized for the slices (ex: quota 90% utilized).
- When the UE becomes reachable before expiry of de-registration timer, then AMF will check if the flag "Update NSACF" is set and if set, then will update NSACF to increase the count for the applicable slice, else if flag is not set then no update of NSCAF is done.

Hereinafter, some methods according to some example embodiments of the invention are described at greater detail.

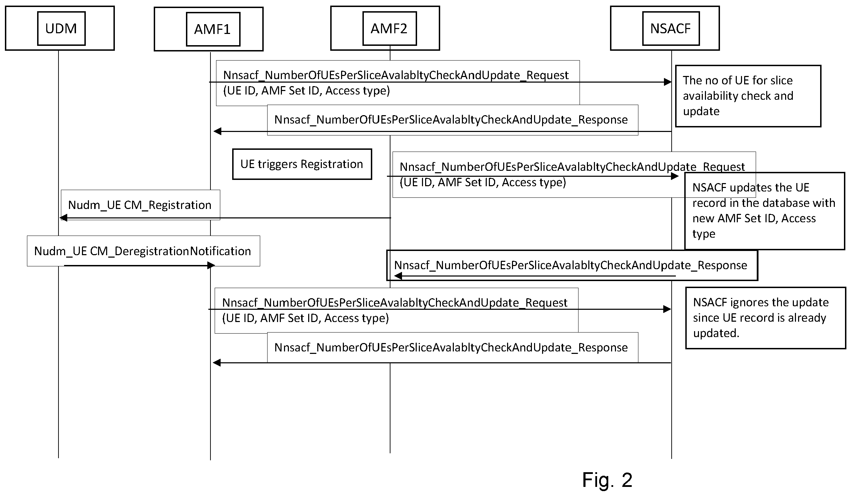

Fig. 2 shows a message sequence chart according to some example embodiments of the invention.

As shown in Fig. 2, during UE registration procedure, when the AMF1 updates the NSACF to increment the counter for the number of UE for the slice, then along with UE ID, it also provides AMF Set ID and Access type.

If the UE triggers new registration procedure from a different AMF (AMF2) before the de-registration from the old AMF (AMF1), the NSACF updates the AMF set ID for the UE in its record, without incrementing the count. In parallel, AMF2 informs UDM on the registration which, in turn, notifies AMF1 that the UE is deregistered from AMF1. As a consequence, AMF1 informs NSACF on the deregistration of the UE from AMF1. Upon receipt of the information on de-registration from the old AMF (AMF1), NSACF checks the record. If AMF set ID does not match with the UE record in its database, NSACF ignores the update. I.e., NSACF understands that the UE is still registered, but at a different AMF. Accordingly, it does not decrease its count of UEs.

Accordingly, in some example embodiments, one of the following processes may take place:
1. If a UE registers with AMF1 with one type of access (e.g.: 3GPP access), and later the UE registers with AMF1 (the same AMF) for another type of access (e.g.: non-3GPP access) before de-registering from 3GPP access, the AMF will not update NSACF. Only when UE de-registers from both access types, the AMF updates NSACF to remove the record for the UE (and, thus, decrement the count of registered UEs).
2. If a UE registers with AMF1 for 3GPP access and registers with AMF2 for non-3GPP access. In this case, both AMF1 and AMF2 update the NSACF. However, NSACF does not create two record but creates (updates) a single record for the UE, namely: (UE ID, AMF1-3GPP access, AMF2-non-3GPP access).

In some example embodiments of the invention, this solution also covers the scenarios of:
- graceful shutdown of the AMF1. In case of graceful shutdown, the AMF1 informs on the deregistration of the UEs although they are registered at a different UE. Hence, NSCAF does not decrement the count.
- Network related issues where update (deregistration-Notification) to previous AMF will fail. There can be multiple reasons for the same, example
   ∘ AMF1 is overloaded, therefore it will reject the deregistrationNotification,
   ∘ Due to network congestions, UDM or SCP may discard the message towards AMF1.

Therefore, AMF1 purges the UE data after some time. When AMF1 deletes the context by its own, then it will try to decrement the count at NSCAF, which will fail due to the above enhancement.

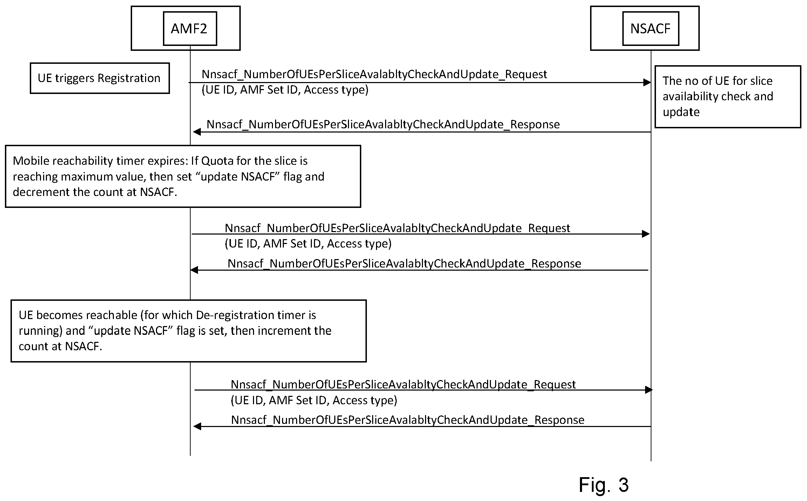

Fig. 3 shows a message sequence chart according to some example embodiments of the invention. As shown in Fig. 3, when UE's mobile reachability timer expires, the AMF sets the PPF flag and starts the de-registration timer for the UE. In addition, AMF requests NSCAF to remove the UE from the records, i.e. to decrease the number of UEs registered at NSCAF. In order to distinguish this removal from a conventional deregistration, AMF sets a flag, e.g. named "update NSCAF flag". Thus, the number of UEs registered in NSCAF is reduced such that another UE may be registered at AMF and NSCAF while the UE is still not reachable.

In some example embodiments, as shown in Fig. 3, this decreasing of the number of UEs registered in NSCAF is performed only if the number of UEs registered in NSCAF is close to a predefined portion of the quota. The predefined portion may be e.g. 70% or 80% or 90%. In some other example embodiments, this decreasing is performed irrespective of the utilization ratio of the quota.

If UE becomes reachable while the de-registration timer is still running, AMF checks if the update NSCAF flag is set. If so, it registers the UE again in NSCAF (increases the count). If not, AMF assumes that it did not decrease the count at NSCAF for this UE. Accordingly, it does not register the UE again at NSCAF.

In some example embodiments of the invention, instead of setting a flag in the AMF, AMF may request NSACF to set a flag (e.g. named "unreachable flag") when the decrease of the count is due to a UE with the de-registration timer still running. Then, NSACF may use this flag to prioritize UEs having the flag set over those having the flag not set. I.e., when the UE becomes reachable again while the de-registration timer is still running, NSACF will admit this UE and reject another UE if the number of UEs exceeded the quota in case the NSACF would admit both UEs.

In these embodiments, if NSACF receives the request to set the flag (e.g. named "unreachable flag") for a UE, NSACF decrements the count of registered UEs. In addition, NSACF may remove the record for the UE from its storage, or NSACF may maintain the record for the UE. In the latter case, the number of records does not match to the count of registered UEs, but processing and/or signalling effort is lower if the UE becomes reachable again. That is, in the latter case, if the UE becomes reachable again, AMF may request to admit the UE for the AMF again, but need not to request creation of a record for the UE at the NSACF. For example, this request may comprise nothing else than an identifier of the UE (e.g. no identifier of the AMF set, no identifier of the access type, etc.). From this special request, NSACF may immediately understand that it stores a record for the UE although the UE is currently not registered at any AMF of the slice. On the other hand, in the former case, the request from AMF to NSACF when the UE becomes reachable again may be of the same form and content as the request when the UE registers the first time at a AMF of the slice, which simplifies the communication protocol between AMF and NSACF.

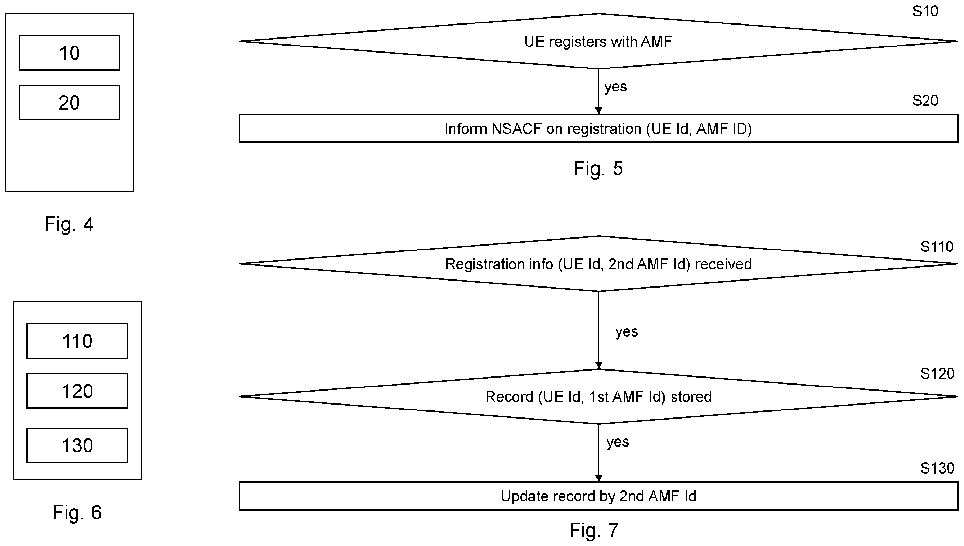

Fig. 4 shows an apparatus according to an example embodiment of the invention. The apparatus may be a registration management function such as a AMF, or an element thereof. Fig. 5 shows a method according to an example embodiment of the invention. The apparatus according to Fig. 4 may perform the method of Fig. 5 but is not limited to this method. The method of Fig. 5 may be performed by the apparatus of Fig. 4 but is not limited to being performed by this apparatus.

The apparatus comprises means for monitoring 10 and means for informing 20. The means for monitoring 10 and means for informing 20 may be a monitoring means and informing means, respectively. The means for monitoring 10 and means for informing 20 may be a monitor and informer, respectively. The means for monitoring 10 and means for informing 20 may be a monitoring processor and informing processor, respectively. The means for monitoring 10 monitors if a terminal registers with a registration management function (S10). The registration management function is responsible for registering the terminal if the terminal is served by a slice. The registration management function may be an AMF or a portion thereof.

If the terminal registers with the registration management function (S10 = yes), the means for informing 20 informs an admission control function of the slice on an identifier of the terminal and an identifier of the registration management function.

Fig. 6 shows an apparatus according to an example embodiment of the invention. The apparatus may be an admission control function such as a NSACF, or an element thereof. Fig. 7 shows a method according to an example embodiment of the invention. The apparatus according to Fig. 6 may perform the method of Fig. 7 but is not limited to this method. The method of Fig. 7 may be performed by the apparatus of Fig. 6 but is not limited to being performed by this apparatus.

The apparatus comprises means for monitoring 110, means for checking 120, and means for updating 130. The means for monitoring 110, means for checking 120, and means for updating 130 may be a monitoring means, checking means, and updating means, respectively. The means for monitoring 110, means for checking 120, and means for updating 130 may be a monitor, checker, and updater, respectively. The means for monitoring 110, means for checking 120, and means for updating 130 may be a monitoring processor, checking processor, and updating processor, respectively.

The means for monitoring 110 monitors if an admission control function of a slice receives a registration information (S110). The registration information comprises an identifier of a terminal and an identifier of a second registration management function. The registration information informs that the terminal registers with the second registration management function.

If the admission control function receives the registration information (S110 = yes), the means for checking 120 checks if the admission control function stores a record comprising the received identifier of the terminal (S120). In detail, the record indicates that the terminal is registered with a first registration management function. Each of the first and second registration management functions is responsible for registering the terminal if the terminal is served by the slice. Each of the first and second registration management functions may be an AMF.

If the admission control function stores the record (S120 = yes), the means for updating 130 updates the record by the received identifier of the second registration management function.

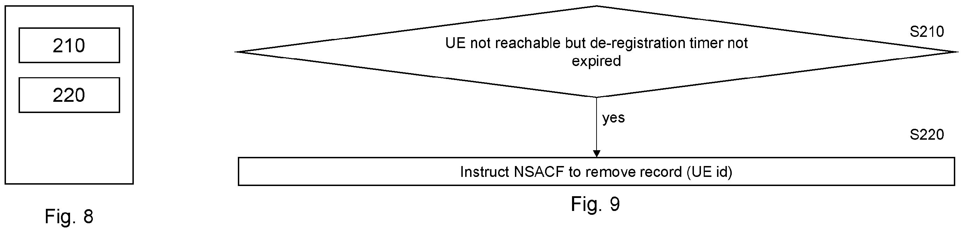

Fig. 8 shows an apparatus according to an example embodiment of the invention. The apparatus may be a registration management function such as a AMF, or an element thereof. Fig. 9 shows a method according to an example embodiment of the invention. The apparatus according to Fig. 8 may perform the method of Fig. 9 but is not limited to this method. The method of Fig. 9 may be performed by the apparatus of Fig. 8 but is not limited to being performed by this apparatus.

The apparatus comprises means for monitoring 210 and means for instructing 220. The means for monitoring 210 and means for instructing 220 may be a monitoring means and instructing means, respectively. The means for monitoring 210 and means for instructing 220 may be a monitor and instructor, respectively. The means for monitoring 2210 and means for instructing 220 may be a monitoring processor and instructing processor, respectively.

The means for monitoring 210 monitors if a registration management function determines that a terminal registered at the registration management function is not reachable (S210). Furthermore, the means for monitoring 210 monitors if a de-registration timer of the registration management function for the terminal has not expired yet (S210). The registration management function is responsible for registering the terminal if the terminal is served by a slice.

If the registration management function receives the information that the terminal is not reachable but the de-registration timer for the terminal has not expired yet (S210 = yes), the means for instructing 220 instructs an admission control function of the slice to remove a record comprising an identifier of the terminal (S220).

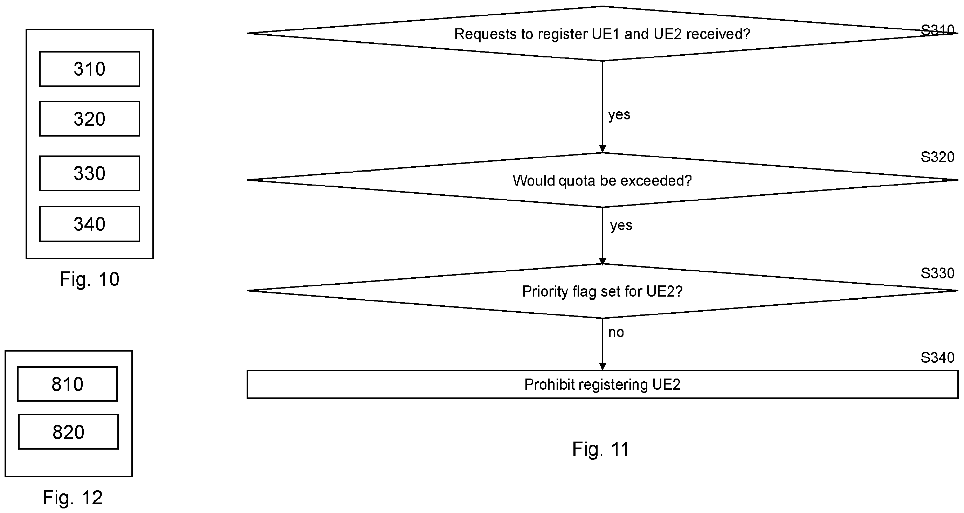

Fig. 10 shows an apparatus according to an example embodiment of the invention. The apparatus may be an admission control function such as a NSACF, or an element thereof. Fig. 11 shows a method according to an example embodiment of the invention. The apparatus according to Fig. 10 may perform the method of Fig. 11 but is not limited to this method. The method of Fig. 11 may be performed by the apparatus of Fig. 10 but is not limited to being performed by this apparatus.

The apparatus comprises means for monitoring 310, means for deciding 320, means for checking 330, and means for prohibiting 340. The means for monitoring 310, means for deciding 320, means for checking 330, and means for prohibiting 340 may be a monitoring means, deciding means, checking means, and prohibiting means, respectively. The means for monitoring 310, means for deciding 320, means for checking 330, and means for prohibiting 340 may be a monitor, decider, checker, and prohibitor, respectively. The means for monitoring 310, means for deciding 320, means for checking 330, and means for prohibiting 340 may be a monitoring processor, deciding processor, checking processor, and prohibiting processor, respectively.

The means for monitoring 310 monitors if an admission control function of a slice receives a first request for a first terminal and a second request for a second terminal (S310). Each of the first and second requests indicates that the respective terminal is to be registered at a respective registration management function responsible for registering the terminal if the terminal is served by the slice.

If the first request and the second request are received (S310 = yes), the means for deciding 320 decides whether a quota of the slice would be exceeded if the first terminal and the second terminal were registered at the respective registration management function (S320). The deciding is based on a count of registered terminals stored at the admission control function. For example, the count of registered terminals may be equal to a number of records stored for registered UEs.

Furthermore, if the first request and the second request are received (S310 = yes), the means for checking 330 checks if a priority flag for the second terminal is set (S330).

S320 and S330 may be performed in an arbitrary sequence. They may be performed fully or partly in parallel.

If the quota of the slice would be exceeded if the first terminal and the second terminal were registered at the respective registration management function (S320 = yes), and the priority flag for the second terminal is not set (S330 = no): the means for prohibiting 340 prohibits the respective registration management function to register the second terminal (S340).

Fig. 12 shows an apparatus according to an embodiment of the invention. The apparatus comprises at least one processor 810, at least one memory 820 including computer program code, and the at least one processor 810, with the at least one memory 820 and the computer program code, being arranged to cause the apparatus to at least perform at least one of the methods according to Figs. 5, 7, 9, and 11 and related description.

Some example embodiments of this invention are particularly useful in a 5G network. However, the invention is not limited to 5G. It may be used in other networks, too, e.g. in former or forthcoming generations of 3GPP networks such as 4G, 6G, 7G, etc. It may be used in any wireless (mobile) and wireline communication networks, where a function may be implemented on a slice for which a quota is defined.

One piece of information may be transmitted in one or plural messages from one entity to another entity. Each of these messages may comprise further (different) pieces of information.

Names of network elements, network functions, protocols, and methods are based on current standards. In other versions or other technologies, the names of these network elements and/or network functions and/or protocols and/or methods may be different, as long as they provide a corresponding functionality.

In particular, AMF serves as a function to which all UEs which are currently served in the slice must be registered. In other networks than 5G networks, this role may have a different name. E.g., in this aspect, the AMF corresponds to a MME of LTE or a MSC of GSM. Apart from Registration Management, AMF may be responsible for Connection Management, Reachability Management, Mobility Management and/or various functions relating to security and access management and authorization for the slice.

Some example embodiments are described where AMF sets and/or clears PPF. However, in some example embodiments, PPF may not be involved or may not even be present.

Some example embodiments are described where AMF and NSACF store and exchange the access type (e.g. 3GPP access or non-3GPP access) of the UE. However, in some example embodiments, the access type may not be involved. For example, in some example embodiments, a non-3GPP access may not be foreseen. Hence, the access type may not even be present.

A UE is a type of a terminal. The term "terminal" or "UE" includes also laptops, smartphones, MTC devices, robots etc..

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be deployed in the cloud.

According to the above description, it should thus be apparent that example embodiments of the present invention provide, for example, an access management function and/or a mobility management function such as a AMF, or a component thereof, an apparatus embodying the same, a method for controlling and/or operating the same, and computer program(s) controlling and/or operating the same as well as mediums carrying such computer program(s) and forming computer program product(s). According to the above description, it should thus be apparent that example embodiments of the present invention provide, for example, an admission control function such as a NSACF, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Each of the entities described in the present description may be embodied in the cloud.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus comprising:
one or more processors, and
memory storing instructions that, when executed by the one or more processors, cause the apparatus to perform:
monitoring if a terminal registers with a registration management function , wherein the registration management function is responsible for registering the terminal if the terminal is served by a slice;
informing an admission control function of the slice on an identifier of the terminal and an identifier of the registration management function if the terminal registers with the registration management function.

2. The apparatus according to claim 1, wherein the identifier of the registration management function comprises an identifier of a set of registration management functions to which the registration management function belongs.

3. Apparatus comprising:
one or more processors, and
memory storing instructions that, when executed by the one or more processors, cause the apparatus to perform:
monitoring if an admission control function of a slice receives a registration information, wherein the registration information comprises an identifier of a terminal and an identifier of a second registration management function, and the registration information informs that the terminal registers with the second registration management function;
checking if the admission control function stores a record comprising the received identifier of the terminal if the admission control function receives the registration information, wherein the record indicates that the terminal is registered with a first registration management function, wherein each of the first and second registration management functions is responsible for registering the terminal if the terminal is served by the slice;
updating the record by the received identifier of the second registration management function if the admission control function stores the record.

4. The apparatus according to claim 3, wherein the instructions, when executed by the one or more processors, further cause the apparatus to perform:
supervising if the admission control function receives a deregistration information, wherein the deregistration information comprises the identifier of the terminal and an identifier of a third registration management function, and the deregistration information informs that the terminal deregisters from the third registration management function;
checking if the admission control function stores the record comprising the identifier of the terminal and the identifier of the first registration management function or the second registration management function if the deregistration information is received;
comparing the identifier of the third registration management function with the identifier registration management function comprised in the stored record if the admission control function stores the record;
inhibiting removing the record if the identifier of the third registration management function is different from the identifier of the registration management function comprised in the stored record.

5. The apparatus according to claim 4, wherein the instructions, when executed by the one or more processors, further cause the apparatus to perform:
removing the record if the identifier of the third registration management function is equal to the identifier of the registration management function comprised in the stored record.

6. The apparatus according to any of claims 3 to 5, wherein at least one of the identifier of the first registration management function, the identifier of the second registration management function, and, if dependent on claim 4, the identifier of the third registration management function comprises an identifier of a respective set of registration management functions to which the respective registration management function belongs.

7. Apparatus comprising:
one or more processors, and
memory storing instructions that, when executed by the one or more processors, cause the apparatus to perform:
monitoring if a registration management function responsible for registering a terminal if the terminal is served by a slice determines that the terminal registered at the registration management function is not reachable but a de-registration timer of the registration management function for the terminal has not expired yet;
if the registration management function receives the information that the terminal is not reachable but the de-registration timer for the terminal has not expired yet: instructing an admission control function of the slice to remove a record comprising an identifier of the terminal.

8. The apparatus according to claim 7, wherein the instructions, when executed by the one or more processors, further cause the apparatus to perform:
supervising if the registration management function receives an information that the terminal becomes reachable before the de-registration timer has expired;
if the registration management function receives the information that the terminal becomes reachable before the de-registration timer has expired: instructing the admission control function to create a record comprising the identifier of the terminal and an identifier of the registration management function.

9. The apparatus according to any of claims 7 and 8, wherein the instructions, when executed by the one or more processors, further cause the apparatus to perform:
if the registration management function receives the information that the terminal is not reachable but the de-registration timer for the terminal has not expired yet: setting an update flag for the terminal, wherein the update flag indicates that the admission control function is instructed to remove the record comprising the identifier of the terminal;
if the registration management function receives the information that the terminal becomes reachable before the de-registration timer for the terminal has expired:
checking if the update flag is set for the terminal;
if the update flag is set for the terminal: cancelling the update flag for the terminal;
if the update flag is not set for the terminal: inhibiting the instructing the admission control function to create the record comprising the identifier of the terminal.

10. The apparatus according to any of claims 7 and 8, wherein the instructions, when executed by the one or more processors, further cause the apparatus to perform:
if the registration management function receives the information that the terminal is not reachable but the de-registration timer for the terminal has not expired yet:
instructing the admission control function to set a priority flag for the terminal.

11. The apparatus according to any of claims 7 to 10, wherein the instructions, when executed by the one or more processors, further cause the apparatus to perform:
checking if a number of terminals registered at the registration management function exceeds a predefined portion of a quota of the slice;
if the number of the terminals does not exceed the predefined portion of the quota: inhibiting the instructing the admission control function to remove the record comprising the identifier of the terminal

12. The apparatus according to any of claims 7 to 11, wherein the identifier of the registration management function comprises an identifier of a set of registration management functions to which the registration management function belongs.

13. Apparatus comprising:
one or more processors, and
memory storing instructions that, when executed by the one or more processors, cause the apparatus to perform:
monitoring if an admission control function of a slice receives a first request for a first terminal and a second request for a second terminal, wherein each of the first and second requests indicates that the respective terminal is to be registered at a respective registration management function responsible for registering the terminal if the terminal is served by the slice;
deciding, if the first request and the second request are received, whether, according to a count of registered terminals stored at the admission control function, a quota of the slice would be exceeded if the first terminal and the second terminal were registered at the respective registration management function;
checking if a priority flag for the second terminal is set if the first request and the second request are received;
if the quota of the slice would be exceeded if the first terminal and the second terminal were registered at the respective registration management function, and the priority flag for the second terminal is not set: prohibiting the respective registration management function to register the second terminal.

14. The apparatus according to claim 13, wherein the instructions, when executed by the one or more processors, further cause the apparatus to perform:
checking if a priority flag for the first terminal is set;
if the quota of the slice would be exceeded if the first terminal and the second terminal were registered at the respective registration management function, the priority flag for the first terminal is set, and the priority flag for the second terminal is not set:
informing the respective registration management function that the first terminal may be registered with the respective registration management function.

15. The apparatus according to any of claims 13 and 14, wherein
each of the first and second requests requests to create a record for the respective terminal;
each of the records indicates that the respective terminal is registered at the respective registration management function;
the count of registered terminals is equal to the number of the records stored in the admission control function; and the instructions, when executed by the one or more processors, further cause the apparatus to perform:
if the quota of the slice would be exceeded if the first terminal and the second terminal were registered at the respective registration management function, and the priority flag for the second terminal is not set: inhibiting the creating of the record for the second terminal.

16. The apparatus according to any of claims 13 and 14, wherein the instructions, when executed by the one or more processors, further cause the apparatus to perform:
supervising if the admission control function receives a request to set a priority flag for the first terminal;
decrementing the count of registered terminals if the admission control function receives the request to set the priority flag for the first terminal;
inhibiting to remove a stored record for the first terminal if the admission control function receives the request to set the priority flag for the first terminal; wherein
the record for the first terminal indicates that the first terminal is registered at the respective registration management function.

17. Method comprising:
monitoring if a terminal registers with a registration management function , wherein the registration management function is responsible for registering the terminal if the terminal is served by a slice;
informing an admission control function of the slice on an identifier of the terminal and an identifier of the registration management function if the terminal registers with the registration management function.

18. Method comprising:
monitoring if an admission control function of a slice receives a registration information, wherein the registration information comprises an identifier of a terminal and an identifier of a second registration management function, and the registration information informs that the terminal registers with the second registration management function;
checking if the admission control function stores a record comprising the received identifier of the terminal if the admission control function receives the registration information, wherein the record indicates that the terminal is registered with a first registration management function, wherein each of the first and second registration management functions is responsible for registering the terminal if the terminal is served by the slice;
updating the record by the received identifier of the second registration management function if the admission control function stores the record.

19. Method comprising:
monitoring if a registration management function responsible for registering a terminal if the terminal is served by a slice determines that the terminal registered at the registration management function is not reachable but a de-registration timer of the registration management function for the terminal has not expired yet;
if the registration management function receives the information that the terminal is not reachable but the de-registration timer for the terminal has not expired yet: instructing an admission control function of the slice to remove a record comprising an identifier of the terminal.

20. Method comprising:
monitoring if an admission control function of a slice receives a first request for a first terminal and a second request for a second terminal, wherein each of the first and second requests indicates that the respective terminal is to be registered at a respective registration management function responsible for registering the terminal if the terminal is served by the slice;
deciding, if the first request and the second request are received, whether, according to a count of registered terminals stored at the admission control function, a quota of the slice would be exceeded if the first terminal and the second terminal were registered at the respective registration management function;
checking if a priority flag for the second terminal is set if the first request and the second request are received;
if the quota of the slice would be exceeded if the first terminal and the second terminal were registered at the respective registration management function, and the priority flag for the second terminal is not set: prohibiting the respective registration management function to register the second terminal.
